# NOUVEAU FASCICULE DE BREVET EUROPEEN

(11) **EP 0 802 759 B2**
(45) Date de publication et mention de la décision concernant l'opposition: **16.04.2003**
(45) Mention de la délivrance du brevet: 11.08.1999
(21) Numéro de dépôt: 96937349.7
(22) Date de dépôt: 28.10.1996
(51) Int. Cl.: A47J 43/28

(54) **RECIPIENT DE CUISINE AVEC MANCHE DE PREHENSION ET MOYENS DE RETENUE D'UN USTENSILE**
KOCHGESCHIRR MIT EINEM GRIFF UND MITTELN ZUM HALTEN EINES GERÄTS
COOKING RECEPTACLE WITH A GRIPPING HANDLE AND MEANS FOR RETAINING A UTENSIL

(30) Priorité: 26.10.1995 FR 9512897
(43) Date de publication de la demande: 29.10.1997
(73) Titulaire: Tourbaiewski, Serge, 56340 Carnac (FR); Hamon, Huberte, 56340 Carnac (FR)
(72) Inventeur: Tourbaiewski, Serge, 56340 Carnac (FR); Hamon, Huberte, 56340 Carnac (FR)
(74) Mandataire: L'Helgoualch, Jean
(86) Numéro de dépôt international: FR9601687
(87) Numéro de publication internationale: WO97015221

(56) Documents cités:
- FR-A- 2 508 302
- GB-A- 540 308
- US-A- 1 554 887
- US-A- 2 483 724
- US-A- 2 900 151
- US-A- 5 105 963
- Catalogue La Redoute Printemps,Printemps été 1979; p. 774 et 775

## Description

La présente invention a pour objet un récipient de cuisine pourvu d'un manche de préhension et de moyens de retenue d'un ustensile de cuisine tel qu'une fourchette, une cuillère ou une spatule.

Lorsque l'on cuisine des aliments en les faisant chauffer dans un récipient tel qu'une casserole ou une poêle, il est courant d'avoir à saisir un ustensile tel qu'une cuillère ou une fourchette pour prélever, mélanger ou retourner les aliments. Quand cette opération est effectuée, on repose l'ustensile sur un support proche du récipient de cuisine, tel qu'une table, un plan de travail, une assiette, le couvercle du récipient, etc.

Cette habitude de procéder a pour conséquence que le support est rapidement sali par les fragments d'aliments ou de liquides laissés sur l'ustensile. Généralement, ce sont même plusieurs de ces supports qui sont salis, l'ustensile étant déposé tantôt sur l'un, tantôt sur un autre.

Des personnes prennent l'habitude de poser l'ustensile en équilibre sur le rebord du récipient. Dès lors que cet équilibre est instable, l'ustensile vient à tomber sur la plaque de cuisson ou la cuisinière et la salit. Par ailleurs, lorsque cet ustensile est métallique, il emmagasine rapidement la chaleur accumulée par le récipient et devient délicat à saisir, au risque de se brûler.

On a proposé des équipements pour retenir un ustensile de cuisine sur un récipient pourvu d'un manche de préhension.

Ainsi, par exemple, on décrit dans le document US-A-5 105 963 un récipient de cuisine tel qu'une casserole, dont le manche est pourvu d'équipements pour le maintien en place d'un ustensile tel qu'une cuillère. Dans une variante, il s'agit de bandeaux fixés respectivement sur les manches de la casserole et de la cuillère et qui comportent des éléments aggripants en forme de boucles et de crochets complémentaires, plus connus sous la marque VELCRO. Dans d'autres formes de réalisation, les équipements consistent en une pince, une pièce aimantée, etc.

D'autres types d'équipements ont été proposés. Il s'agit par exemple de petites pattes formant saillies au-dessus de la face supérieure concave d'un manche de casserole, entre lesquelles le manche de l'ustensile est coincé, de manière à le maintenir suspendu parallèlement au manche de la casserole (US-A-1 554 887).

II peut s'agir également d'une saillie en forme de pince permettant d'y accrocher un ustensile dans une direction perpendiculaire à celle du manche de récipient (GB-A-540 308), ou d'autres petites pièces venant se fixer sur le rebord de la casserole ou sur le manche (FR-A-2 508 302 ; US-A-2 483 724 ; US-A-2 900 151).

Tous ces systèmes présentent l'inconvénient de présenter des pièces rapportées au récipient et/ou a l'ustensile, et/ou des parties en saillie par rapport au récipient.

L'emploi de pièces rapportées vient augmenter le coût d'achat du matériel de cuisine, surtout s'il faut en équiper tous les récipients. De plus, cela implique de devoir les nettoyer régulièrement, ce qui est fastidieux.

Quant aux parties en saillie, elles ont pour principal inconvénient d'être la cause de blessures et autres incidents. Un exemple type d'un tel incident est celui selon lequel l'utilisateur accroche par inadvertance dans ces parties en saillie, ce qui déséquilibre le récipient et le fait se renverser.

La présente invention a pour but de pallier ces inconvénients.

Plus précisément, elle a pour but de proposer un récipient de cuisine pourvu d'un manche de préhension et de moyens de retenue d'un ustensile qui soit simple de conception et qui ne présente aucun élément rapporté ou partie saillante pour la retenue de l'ustensile.

Elle a aussi pour but de parvenir à cet objectif sans remettre en cause ou compliquer la technique de fabrication courante des manches de récipients.

Un autre objectif est de fournir un tel récipient sans augmenter notablement son prix de revient.

Ces objectifs, ainsi que d'autres, sont atteints conformément à la présente invention.

Selon invention, les moyens de retenue sur la face supérieure du manche de préhension d'un récipient sont comme défini dans les revendications.

Ainsi, la réception, la retenue et l'immobilisation de l'ustensile sont réalisées sans avoir recours à des éléments additionnels, notamment saillants.

Par ailleurs, selon d'autres caractéristiques avantageuses mais non limitatives:
- la forme et les dimensions dudit canal sont adaptées pour recevoir seulement le manche de l'ustensile;
- ledit canal débouche du côté du manche tourné vers le récipient et en ce que sa génératrice la plus basse s'étend au-dessus du rebord supérieur du contenant du récipient;
- ledit canal est formé d'au moins deux tronçons distincts et alignés l'un par rapport à l'autre, l'espace entre ces deux tronçons n'assurant en aucune manière le support du manche de l'ustensile;
- ledits logements sont conformé pour recevoir intégralement ou quasi intégralement ledit ustensile;
- ledits logements consistent en un canal de réception du manche de l'ustensile, qui communique avec une cuvette de réception du reste dudit ustensile;
- une desdites séries est conformée pour recevoir le manche d'une cuillère, tandis que la seconde série est conformée pour recevoir une fourchette;
- le manche est droit ou légèrement recourbé ;
- le manche comporte une partie courbe de raccordement au contenant du récipient.

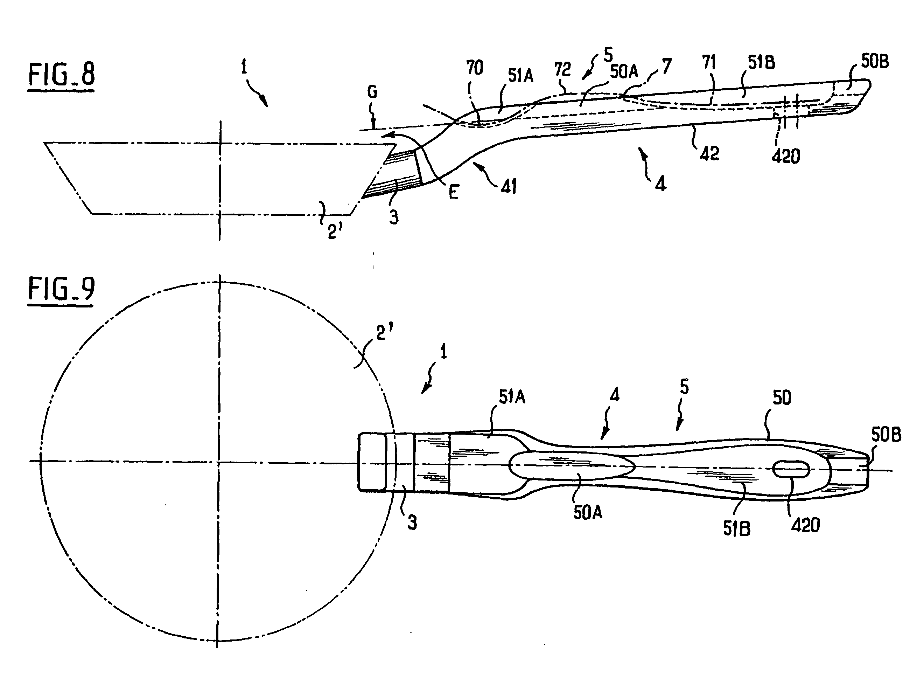

D'autres caractéristiques et avantages de l'invention apparaîtront à la lecture de la description qui va suivre d'un mode de réalisation de l'invention illustré aux figures 8 et 9. Cette description sera faite en référence aux dessins annexés dans lesquels :
- la figure 1 est une vue partielle de côté d'une casserole conforme à la présente invention;
- la figure 2 est une vue partielle de dessus de la casserole de la figure 1;
- la figure 3 est une vue partielle de côté d'une seconde forme de réalisation de la casserole de la figure 1 ;
- la figure 4 est une vue partielle de dessus de la casserole de la figure 3 ;
- la figure 5 est une vue de côté d'une autre forme de réalisation de la casserole, avec une cuillère en bois en place sur le manche ;
- la figure 6 est une vue de face du manche de la casserole de la figure 5 ;
- la figure 7 est une vue de dessus de la casserole de la figure 5 ;
- la figure 8 est une vue de côté d'une poêle comportant deux séries de moyens de retenue pour des ustensiles différents ;
- la figure 9 est une vue de dessus de la poêle de la figure 8.

Dans l'ensemble de la présente description et des revendications, on entendra par l'expression "ustensile de cuisine" tout objet avec un manche et une partie dite "active", permettant de mélanger ou de prélever des aliments dans un récipient. Il s'agit par exemple d'une cuillère, d'une fourchette ou encore d'une spatule.

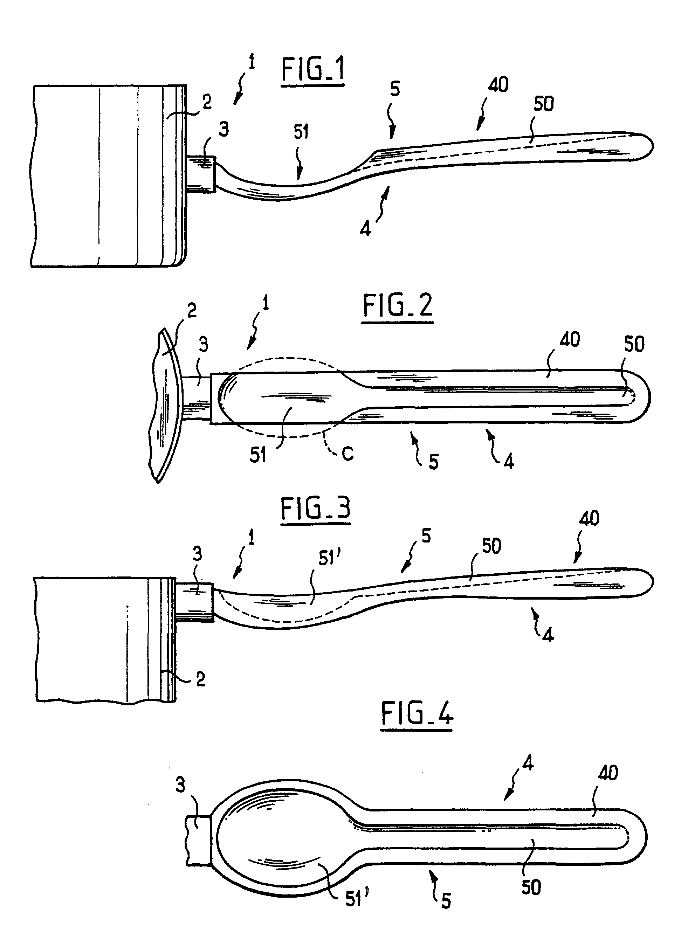

La casserole 1 représentée partiellement à la figure 1 comporte, comme cela est bien connu, un contenant 2 de forme cylindrique ouvert à sa partie supérieure. Il est par exemple réalisé en métal ou en verre. Dans le cas présent, il s'agit d'un contenant en métal.

Cette casserole comporte, de manière usuelle, un manche de préhension 4 qui est fixé à la périphérie du contenant 2 grâce à une pièce en "U" non représentée et recouverte d'une bague de protection métallique 3, de type bien connu.

Le manche 4 est par exemple réalisé en bakélite ou en toute autre matière plastique résistante à la chaleur. Dans d'autres formes de réalisation, ce manche peut être réalisé en bois, en verre lorsque le contenant est lui aussi en verte, ou en métal. Dans un tel cas, on intercale entre le contenant et le manche une pièce intermédiaire apte à ne pas véhiculer la chaleur de l'un à l'autre.

II s'agit d'un manche généralement droit c'est-à-dire rectiligne, mais cependant légèrement incliné par rapport à l'horizontale.

II a par exemple une section généralement rectangulaire ou ovale.

Les moyens de retenue d'un ustensile sur ce récipient de cuisine consistent, dans le cas présent, en deux logements formés dans la face supérieure 40 du manche 4, et conformés de manière à assurer à eux seuls la réception, la retenue et l'immobilisation d'un ustensile de cuisine.

Plus précisément, ces logements consistent d'une part en un canal longitudinal 50 et en une cuvette 51 qui communique avec le canal. Ce dernier s'étend sensiblement depuis le bord libre du manche 40 jusqu'à environ deux tiers de la longueur du manche.

II s'agit d'une gorge de forme semi-cylindrique qui est légèrement inclinée par rapport à l'axe du manche de sorte que son extrémité située du côté de l'extrémité libre du manche est légèrement relevée. En d'autres termes, la gorge voit sa profondeur diminuer dès lors qu'on se rapproche de l'extrémité libre du manche.

Bien entendu, le canal peut avoir une section d'une autre forme, choisie en fonction de la forme de l'ustensile à supporter.

Ce canal débouche, du côté du contenant 2, sur un creux en forme de cuvette 51 qui débouche de part et d'autre du manche.

Comme le montre plus particulièrement la figure 2, ces logements permettent d'assurer à eux seuls le positionnement, la retenue et l'immobilisation d'une cuillère, par exemple une cuillère en bois. On comprend aisément que le manche de cette cuillère se positionne dans le canal 50 tandis que sa partie active se positionne partiellement dans la cuvette 51. Sur cette figure, on a représenté par des traits interrompus C la position qu'occuperaient les rebords latéraux d'une telle cuillère.

Ainsi, sans avoir recours à des éléments additionnels notamment saillants sur le manche, on peut positionner de manière particulièrement stable ladite cuillère.

On remarquera qu'il est possible de saisir le manche même lorsque la cuillère est en place dans les logements. Ceci peut être effectué sans avoir à se salir la main puisque le manche de la casserole est tenu dans sa partie pourvue du canal 50, lequel reçoit le manche de la cuillère. Or, en principe, ce manche n'est pas souillé par des aliments.

Contrairement au manche des figures 1 et 2 qui présente des parois latérales sensiblement parallèles, celui des figures 3 et 4 comporte une partie renflée latéralement permettant d'y ménager une cuvette 51' de forme correspondante à celle de la partie active, c'est-à-dire creuse, d'une cuillère. Dans cette forme de réalisation, on comprend que l'intégralité de la surface de la cuillère est portée par le manche. En quelque sorte, le manche 4 comporte sur sa face supérieure 40 l'empreinte de la cuillère.

Dans les deux modes de réalisation décrits, on remarque qu'aucun desdits logements ne présente d'aménagements formant saillie au-dessus du plan général supérieur du manche.De la sorte, les risques d'accrochage ou de blessures sont éliminés.

De plus, ces logements peuvent être réalisés simplement par une technique de moulage traditionnel, déjà utilisée pour la fabrication des manches, si bien que cela n'en remet pas en cause le coût de revient.

Lorsque le manche de la casserole est en bois, en verre ou en métal, on peut également respectivement former les logements par des techniques adaptées et déjà utilisées pour la fabrication traditionnelle des manches.

Dans les variantes décrites ci-après, le contenant 2 ou 2' des récipients a été représenté en traits mixtes sur les figures, dans un but de simplification.

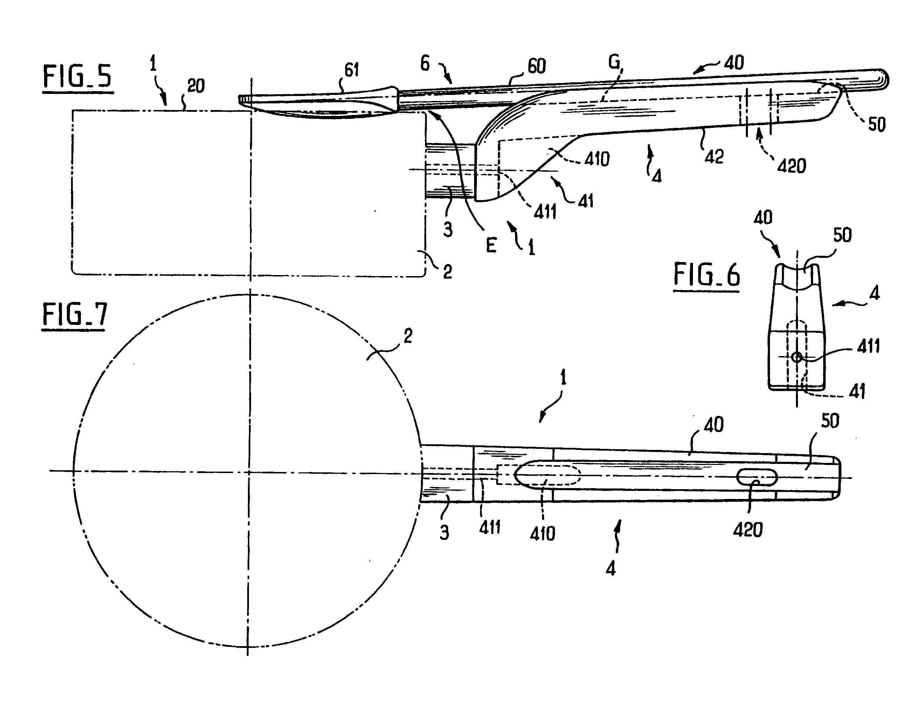

Dans la forme de réalisation des figures 5 à 7, la casserole 1 comporte, fixée au contenant 2, un manche 4 avec une partie de raccordement 41 au contenant 2 de forme généralement courbe. Elle se poursuit par une partie droite 42, généralement inclinée par rapport à l'horizontale et pourvue d'une ouverture 420 traversant l'épaisseur du manche, pour son accrochage à un support.

Comme dans les formes de réalisation déjà décrites, le manche 4 est fixé au contenant 2 au moyen d'une pièce en "U" soudée et recouverte d'une bague métallique 3. Cette pièce reçoit, dans un trou de forme adaptée 411, une vis de fixation non représentée. On notera qu'à ce niveau, la face inférieure du manche 4 comporte une découpe 410 d'accès au trou de la vis.

Dans la face supérieure 40 du manche, et précisément au niveau de sa partie droite 42, est formé un canal 50 qui est adapté pour recevoir le manche d'une cuillère. Dans le cas représenté ici, cette cuillère 6 est en bois et comporte un manche cylindrique 60 et une partie active 61. Le canal 50, de forme semi-cylindrique débouche, au niveau de son extrémité tournée vers le contenant 2, juste au-dessus du rebord 20 du contenant 2. En d'autres termes, la génératrice G la plus basse de ce canal 50 s'étend légèrement au-dessus du rebord supérieur 20 du contenant. Il subsiste donc un léger espace E entre ladite génératrice et le rebord du contenant. De la sorte, le canal est adapté pour recevoir et maintenir en place la cuillère, par son manche 60, sans avoir à reposer sur le rebord 20 du contenant.

Dans une forme de réalisation additionnelle non représentée, le canal 50 s'étend seulement sur la partie intermédiaire du manche 4, ce qui signifie que les zones qui se trouvent dans le prolongement de ce canal ne contribuent en rien au support du manche d'ustensile.

Aux figures 8 et 9 est représentée de côté et de face une poêle dont le contenant 2' est également raccordé à un manche 4 de préhension par une pièce intermédiaire recouverte d'une bague 3. Comme précédemment, ce manche comporte une partie de raccordement courbe 41 et une partie droite 42 pourvue d'une ouverture 420.

Conformément à une caractéristique particulièrement avantageuse de l'invention, le manche comporte deux séries distinctes de logements, destinées chacune à recevoir sélectivement un ustensile différent. Ainsi, dans le cas présent, le manche comporte deux tronçons de canaux en forme de gorge semi-cylindrique 50A et 50B qui sont répartis pour l'un 50A, sensiblement dans la partie intermédiaire du manche, et pour l'autre 50B au niveau de son extrémité libre.

Comme dans la forme de réalisation des figures 5 à 7, la génératrice la plus basse **G** de ces tronçons s'étend au-dessus du rebord supérieur du contenant, ménageant ainsi un espace libre **E**.

De tels canaux permettent, comme dans le cas des figures 5 à 7, de mettre en place et d'y retenir une cuillère, par son manche cylindrique, sans venir en appui sur le rebord du contenant. Bien entendu, si le manche de la cuillère avait une section de forme différente, la forme des tronçons de canaux 50A et 50B serait adaptée en conséquence.

Les logements 51A et 51B ont, quant à eux, respectivement une forme généralement complémentaire de la partie active et d'une partie du manche d'une fourchette 7, représentée en traits mixtes gras à la figure 8. La région courbe 72 de la fourchette, qui s'étend entre la partie active 70 et le manche 71, surplombe le tronçon de canal 50A.

De cette manière, lorsqu'une cuillère à manche cylindrique est nécessaire pour mélanger les aliments contenus dans la poêle, celle-ci peut être reposée sur le manche 4 en prenant appui sur les tronçons 50A et 50B. Par contre, lorsqu'une fourchette est plus adaptée pour le prélèvement desdits aliments, celle-ci peut être positionnée sur le manche au niveau des logements 51A et 51B.

Bien entendu, la forme, les dimensions et la position des logements peuvent être adaptées en fonction des ustensiles qu'ils sont destinés à recevoir.

Là encore, le manche 4 ne comporte aucun élément rapporté ou partie en saillie, en particulier au-dessus de son plan général supérieur, de sorte que les risques d'accrochage ou d'autres incidents sont réduits.

Enfin, le manche des récipients de cuisine conformes à l'invention, sont particulièrement faciles à nettoyer car ils ne présentent pas de partie anguleuse.

## Revendications

1. Récipient de cuisine (1) pourvu d'un manche de préhension (4) ayant un logement formé dans la face supérieure du manche et de moyens de retenue (5) d'un ustensile (6) de cuisine tel qu'une cuillère ou une fourchette ledit logement resistant en au moins un canal (50) qui s'étend sur au moins une partie de la longueur du manche (4) de récipient, conformé de manière à assurer à lui seul la réception, la retenue, l'immobilisation de l'ustensile (6), **caractérisé en ce que** lesdits moyens consistent en deux séries d'au moins deux tronçons distincts du canal (50A, 50B) et au moins deux logements (51A, 51B) distincts, adaptées chacune pour recevoir sélectivement un ustensile différent.

2. Récipient selon la revendication 1, **caractérisé par le fait que** les au moins deux tronçons distincts (50A, 50B) sont alignés l'un par rapport à l'autre, l'espace entre ces deux tronçons n'assurant en aucune manière le support du manche (60) de l'ustensile (6).

3. Récipient selon la revendication 1, **caractérisé par le fait que** lesdits logement sont conformés pour recevoir intégralement ou quasi intégralement ledit ustensile (6).

4. Récipient selon la revendication 3, **caractérisé par le fait que** lesdits logements consistent en un canal (50) de réception du manche de l'ustensile (60), qui communiquent avec une cuvette de réception (51, 51') du reste dudit ustensile (6).

5. Récipient selon la revendication 1, **caractérisé par le fait qu'**une desdites séries (50A, 50B) est conformée pour recevoir le manche (60) d'une cuillèré(6), tandis que la seconde série (51A, 51B) est conformée pour recevoir une fourchette (7).

## Claims

1. A kitchen container (1) provided with a prehension handle (4) having a housing carved thereon, and with means (5) for retaining a cooking utensil (6) such as a spoon or a fork, said housing consisting of at least a channel (50) extending over at least a part of the container handle length (4), so shaped as to ensure alone the take, the holding and securing of the utensil (6), **characterized in that** said means consist of two series of at least two separate parts of the channel (50A, 50B) and at least two separate housings (51A, 51B), each adapted to selectively receive a different utensil.

2. A container according to claim 1, **characterized in that** said at least two separate parts (50A, 50B) are lined up and the space between them two does not in any way hold the handle (60) of the utensil (6).

3. A container according to claim 1, **characterized in that** said housings are so shaped as to receive in full or almost said utensil (6).

4. A container according to claim 3, **characterized in that** said housings are composed of a channel receiving the handle of the utensil (60) which communicates with a bowl (51,51') receiving the remaining part of said utensil (6).

5. A container according to claim 1, **characterized in that** one of said series (50A,51B) is shaped to receive the handle (60) of a spoon (6) whereas the second series (51A,51B) is shaped to receive a fork (7).

## Patentansprüche

1. Kochgefäß (1) mit einem Stiel (4) zum Anfassen, der einen auf der Oberseite des Stiels plazierten Hohlraum und Haltevorrichtungen (5) eines Küchengerates (6), wie eines Löftels oder einer Gabel, hat, wobei der obengenannte Hohlraum aus mindestens einer Mulde (50) besteht, die sich zumindest teilweise in Längstrichtung des Stiels (4) des Gefäßes erstreckt und so geformt ist, daß sie allein die Aufnahme, den Halt und die Fixierung des Gerätes sicherstellt, **dadurch gekennzeichnet, daß** die Haltevorrichtungen aus zwei Reihen wenigstens zweier getrennter Muldenabschnitte (50A, 50B) und wenigster zweier getrennter Hohlräume (51A, 51B) bestehen, welche zwei Reihen jeweils wahlweise ein anderes Gerät aufnehmen können.

2. Gefäß nach Anspruch 1, **dadurch gekennzeichnet, daß** die wenigstens zwei getrennten Muldenabschnitte (50A, 50B) beide auf der gleichen Linie befindlich sind, wobei der Freiraum zwischen diesen zwei Abschnitte keinesfalls den Halt des Stiels (60) des Gerätes (6) sicherstellt.

3. Gefäß nach Anspruch 1, **dadurch gekennzeichnet, daß** die Hohlräume geformt sind, um das obengenannte Gerät (6) vollständig oder nahezu vollständig aufzunehmen.

4. Gefäß nach Anspruch 3, **dadurch gekennzeichnet, daß** die obengenannte Hohlräume aus einer Mulde (50) zur Aufnahme des Stiels des Gerätes (60) bestehen, die mit einer Vertiefung (51, 51') zur Aufnahme des übrigen Teils des obengenannten Gerätes (6) verbunden ist.

5. Gefäß nach Anspruch 1, **dadurch gekennzeichnet, daß** eine der Muldenabschnitte (50A, 50B) geformt ist, um den Stiel (50) eines Löffels (6) aufzunehmen, während die zweite Serie (51A, 51B) geformt ist, um eine Gabel (7) aufzunehmen.
